# EUROPÄISCHE PATENTANMELDUNG

(11) **EP 0 867 632 A1**
(43) Veröffentlichungstag der Anmeldung: **30.09.1998**
(21) Anmeldenummer: 98105351.5
(22) Anmeldetag: 24.03.1998
(51) Int. Cl.: F16D 65/08, F16D 69/04

(54) **Herstellverfahren für eine Trommelbremsbacke**

(30) Priorität: 24.03.1997 DE 19712205
(71) Anmelder: ITT MANUFACTURING ENTERPRISES, INC., Wilmington, Delaware 19801 (US)
(72) Erfinder: Beer, Wilhelm, 65428 Rüsselsheim (DE); Veith, Christoph, 61476 Kronberg (DE); Stiffel, Horst, 65812 Bad Soden/Ts. (DE)
(74) Vertreter: Portwich, Peter

(57) **Zusammenfassung**

Nach heutigem Stand der Technik verwendete Trommelbremsbacken (1) bestehen im wesentlichen aus einem Belagträger (2) sowie einem darauf aufgebrachten Reibbelag (3). Zur Vereinfachung der Herstellung einer derartigen Trommelbremsbacke (1) wird ein modifiziertes Verfahren vorgeschlagen, das hinsichtlich der Bearbeitungszeit und des gesamten Fertigungsaufwandes deutlich verbessert ist. Im einzelnen wird der aus einem flexiblen Bandmaterial (6) bestehende Reibbelag (3) vor der Befestigung auf dem Belagträger (2) einer Schleifbearbeitung unterzogen. Dabei erhält die Reibfläche (7) des Reibbelages eine geeignete Kontur, so daß nach der Befestigung des Reibbelages (3) auf dem in der Regel kreisrund gekrümmten Belagträger (2) eine nahezu ebene Reibfläche (7) entsteht. Eine Nachbearbeitung der Reibfläche (7) nach der Reibbelagbefestigung kann demnach vorteilhafterweise entfallen.

## Beschreibung

Die Erfindung betrifft ein Herstellverfahren für eine Trommelbremsbacke, die im wesentlichen aus einem entsprechend der Kontur der Bremstrommel gekrümmten Belagträger sowie einem auf die radiale Außenseite des Belagträgers aufgebrachten Reibbelag besteht.

Eine Trommelbremse mit solch einer gattungsgemäßen Bremsbacke ist beispielsweise in der DE 41 41 701 A1 offenbart. Darin sind zwei radial aufspreizbare Trommelbremsbacken zusammen mit einer Betätigungseinheit auf einem fahrzeugfesten Trägerblech montiert, das innerhalb einer Bremstrommel angeordnet ist. Die entsprechend der Kontur der Bremstrommel gekrümmten Bremsbacken bestehen im wesentlichen aus einem Belagträger und einem darauf aufgebrachten Reibbelag. Dabei wird der Reibbelag üblicherweise auf dem Belagträger entweder aufgeklebt oder aber aufgenietet, um somit eine abschersichere Befestigung am Belagträger zu gewährleisten. Im einzelnen erfordert das Herstellverfahren für eine derartige Trommelbremsbacke eine mechanische Bearbeitung des Reibbelagbandes (in der Regel ein Schleifbearbeitungsgang), um das Reibbelagmaterial vor der Befestigung am Belagträger zu glätten. Nicht zuletzt durch die Befestigung des Reibbelages am Belagträger entstehen erneut Unebenheiten auf der der Bremstrommel zugekehrten Reibfläche des Reibbelages, die zur Gewährleistung einer ausreichenden Bremsleistung durch eine weitere Schleifbearbeitung beseitigt werden müssen. Damit ist der fertigungstechnische Aufwand zur Herstellung einer gattungsgemäßen Trommelbremsbacke unerwünscht hoch.

Darüber hinaus ist aus der DE 40 06 369 A1 ein Bremsklotz für eine Scheibenbremse bekannt, bei dem der auf den Belagträger aufgebrachte Reibbelag an seinen Rändern abgeschrägt ist. Eine derartige konstruktive Maßnahme dient jedoch weniger der Fertigungsvereinfachung als vielmehr der Verbesserung des Einlaufverhaltens eines derartigen Bremsklotzes. Dabei besitzt die Abschrägung eine äußerst aufwendige hyperbolische Kontur und ist letztlich ausschließlich für ebene Scheibenbremsklötze beschrieben.

Ausgehend vom angeführten Stand der Technik besteht die Aufgabe der Erfindung darin, ein modifiziertes Herstellverfahren für Trommelbremsbacken anzugeben, das hinsichtlich des erforderlichen Fertigungsaufwandes deutlich verbessert ist.

Erfüllt wird die Aufgabe durch ein Herstellverfahren gemäß der Merkmalskombination des Patentanspruchs 1. Danach besteht der auf dem Belagträger aufgebrachte Reibbelag aus einem flexiblen Bandmaterial, das zumindest an der der Bremstrommel zugewandten Reibfläche derart mechanisch, vorzugsweise durch einen Schleifbearbeitungsgang, bearbeitet wird, daß die Reibbelagdicke an den axialen Reibbelagrändern gegenüber der sonstigen Reibbelagdicke reduziert wird. Die mechanische Bearbeitung, in der Regel Schleifbearbeitung, erfolgt vorteilhafterweise unmittelbar am Reibbelagbandmaterial, bevor dieses am Belagträger befestigt wird. Anschließend wird das Reibbelag-Bandmaterial in Abschnitte entsprechender Länge getrennt und schließlich wird je ein Reibbelagabschnitt jeweils auf die radiale Außenseite eines Belagträgers üblicherweise aufgeklebt oder aber aufgenietet. Der durch den Schleifvorgang erzeugte Reibbelagquerschnitt mit reduzierter Reibbelagdicke an den axialen Reibbelagrändern gewährleistet bei geeigneter Bemessung eine ebene Ausbildung der Reibfläche entsprechend der zugehörigen Kontur der Bremstrommelinnenfläche an der fertigen Trommelbremsbacke. Damit kann ein zusätzlicher Schleifbearbeitungsgang an der bereits mit dem Bremsbelag versehenen Bremsbacke entfallen.

In den Unteransprüchen wird eine besonders einfache Art der Schleifbearbeitung beschrieben, bei der die Reibfläche des Reibbelag-Bandmaterials entweder an seinen axialen Rändern lediglich abgeschrägt wird oder aber durch eine Schleifbearbeitung in Achsrichtung der Bremstrommel eine konvexe Wölbung erhält. Damit kann je nach Krümmungsgrad des Bremsträgers eine ebene Reibfläche der fertigen Trommelbremsbacke erzielt werden.

Nach weiteren Ausführungsbeispielen anhand der Unteransprüche 4 und 5 ist der Reibbelagabschnitt auf der radialen Außenseite des zugehörigen Belagträgers jeweils aufgeklebt bzw. aufgenietet.

Ein Ausführungsbeispiel des erfindungsgemäßen Herstellverfahrens wird anhand der Zeichnung im Vergleich zu einem aus dem Stand der Technik bekannten Verfahren dargestellt und im folgenden näher erläutert.

Es zeigen:
- Fig. 1: den Ablauf eines heute üblichen Herstellverfahrens für eine gattungsgemäße Trommelbremsbacke nach dem Stand der Technik,
- Fig. 2: in Einzeldarstellungen den Ablauf des erfindungsgemäßen Herstellverfahrens für eine Trommelbremsbacke.

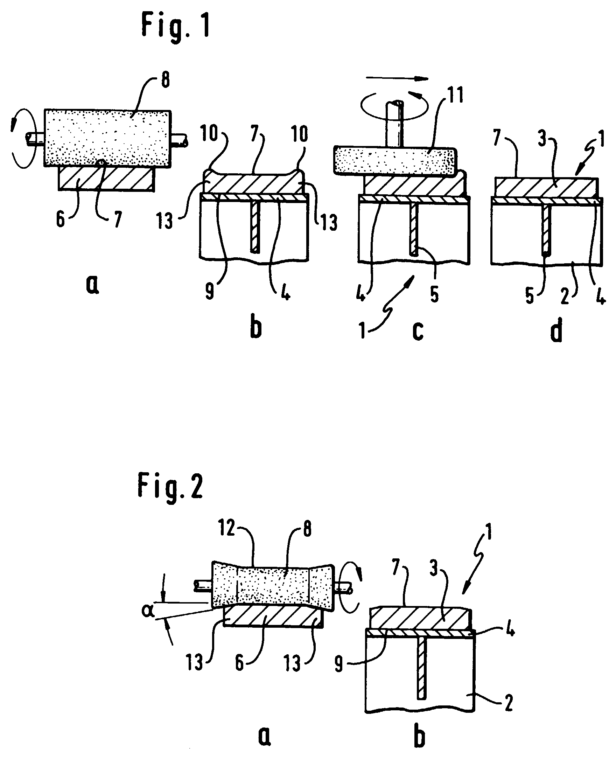

Fig. 1 gibt in vier Einzeldarstellungen 1a bis 1d den Ablauf eines aus dem heutigen Stand der Technik bekannten Herstellverfahrens für eine Trommelbremsbacke wieder. Im allgemeinen besteht die Trommelbremsbacke 1 aus einem Belagträger 2 sowie einem darauf aufgebrachten Reibbelag 3. Der Belagträger 2 besitzt ein entsprechend der Kontur der nicht gezeigten Bremstrommel gekrümmtes Trägerblech 4 sowie einen senkrecht daran befestigten Steg 5, der der Versteifung der gesamten Trommelbremsbacke 1 dient. Trägerblech 4 und Steg 5 können dabei sowohl zweistückig ausgeführt sein als auch einteilig miteinander verbunden sein. Im Verlauf der Herstellung einer solchen Trommelbremsbacke 1 wird der Reibbelag 3 aus einem gepreßten Bandmaterial 6 gewonnen. Das Bandmaterial 6 besteht dabei aus dem Reibbelagwerkstoff und wird üblicherweise in die Gestalt eines Endlosbandes gepreßt. Die infolge des Preßvorganges auf dem Bandmaterial 6 verbleibende Preßhaut muß notwendigerweise vom Reibbelagmaterial 3 entfernt werden. Dies geschieht üblicherweise nach heutigem Stand der Technik durch einen Schleifbearbeitungsgang (siehe Fig. 1a). Dabei wird das Reibbelagband 6 zumindest auf der Reibfläche 7, die zum späteren Eingriff mit der Bremstrommel vorgesehen ist, jedoch vorzugsweise an der gesamten Oberfläche mittels eines walzenartigen Schleifwerkzeuges 8 bearbeitet. Das durch die Schleifbearbeitung erzielte Entfernen der Preßhaut dient zunächst der Gewährleistung der gewünschten Reibeigenschaften und weiterhin der Vorbereitung der Kontaktfläche 9 zum Belagträger 2 für die spätere Verklebung. Anschließend an die erste Schleifbearbeitung wird das flexible Reibbelagband 6 je nach Ausführung der Trommelbremsbacke 1 in Reibbelagabschnitte entsprechender Länge getrennt. Je ein flexibler Reibbelagabschnitt wird dann auf der radialen Außenseite des gekrümmten Trägerbleches 4 des Belagträgers 2 befestigt. Bekanntermaßen wird der Reibbelag 3 bei heutigen Trommelbremsbacken 1 entweder auf den Belagträger 2 aufgeklebt oder aber aufgenietet, wobei für das in Fig. 1 gezeigte Herstellverfahren das Kleben des Reibbelages 3 bevorzugt wird. Nach dem Kleben besitzt die Reibfläche 7 durch die Krümmung des Reibbelages 3 entsprechend dem Trägerblech 4 erfahrungsgemäß zumindest an ihren axialen Rändern Unebenheiten in Form von Erhebungen 10. Zur Beseitigung dieser Erhebungen 10 auf der Reibfläche 7 wird an dieser eine zweite Schleifbearbeitung gemäß Fig. 1c vorgenommen. Die zweite Schleifbearbeitung erfolgt bereits an der gekrümmten Trommelbremsbacke 1, wobei mittels eines Planschleifwerkzeuges 11 eine ebene Reibfläche 7 erzeugt wird. Diese zweite Schleifbearbeitung ist aufgrund der gekrümmten Kontur der Trommelbremsbacke 1 fertigungstechnisch sehr aufwendig und erhöht zudem die Fertigungszeiten. Nach dieser zweiten Schleifbearbeitung hat die Trommelbremsbacke 1 ihren Fertigteilzustand gemäß Fig. 1d erreicht.

Im Gegensatz zu dem aus dem Stand der Technik bereits bekannten Herstellverfahren für Trommelbremsbacken 1 sieht das erfindungsgemäße Verfahren gemäß Fig. 2 vor, den Reibbelag 3 nur ein einziges Mal schleifend zu bearbeiten, wobei die Schleifbearbeitung vor dem Kleben des Reibbelages 3 erfolgt. Die erfindungsgemäße Schleifbearbeitung (siehe Fig. 2a) wird derart durchgeführt, daß der auf den Belagträger 2 aufgebrachte Reibbelag eine ausreichend ebene Reibfläche 7 aufweist. Dazu besitzt das vorzugsweise walzenartige Schleifwerkzeug 8 eine geeignet gestaltete Schleiffläche 12. Das flexible Reibbelag-Bandmaterial 6 erhält durch die Schleifbearbeitung an seinen axialen Randbereichen 13 eine reduzierte Reibbelagdicke. Dazu ist die Schleiffläche 12 des Schleifwerkzeuges 8 an ihren axialen Rändern entsprechend radial nach außen abgeschrägt. Der Neigungswinkel α der Abschrägung beträgt dabei vorzugsweise mehr als 5 Grad. Durch einen derart bemessen Neigungswinkel α der Schleiffläche 12 wird die spätere Aufwerfung von aus dem Stand der Technik bekannten Erhebungen 10 an den axialen Rändern 13 des Reibbelages nach dem Kleben verhindert. Selbstverständlich sind auch andere Konturen der Schleiffläche 12 möglich, die eine reduzierte Reibbelagdicke an den axialen Rändern 13 des Reibbelag-Bandmaterials 6 erzeugen. Beispielsweise ist auch ein walzenartiges Schleifwerkzeug 8 mit konkav gewölbter Mantelfläche denkbar. Nach der Schleifbearbeitung wird bekanntermaßen das Reibbelag-Bandmaterial in entsprechende Reibbelagabschnitte getrennt und anschließend auf dem Belagträger 2 aufgeklebt. Das Auftreten der Erhebungen 10 wird durch die erfindungsgemäße Art der Schleifbearbeitung verhindert. Es entsteht nach der Klebung des Reibbelages 3 unmittelbar die fertige Trommelbremsbacke 1 (siehe Fig. 2b). Dabei ist die Reibfläche 7 bei geeigneter Wahl der Kontur der Schleiffläche 12 des Schleifwerkzeuges 8 nahezu plan und braucht nicht weiter bearbeitet zu werden. Der aus dem Stand der Technik bekannte zweite Schleifbearbeitungsgang kann vorteilhafterweise entfallen.

## Patentansprüche

1. Herstellverfahren für eine Trommelbremsbacke (1), die im wesentlichen aus einem, vorzugsweise kreisrund, gekrümmten Belagträger (2) sowie einem auf die radiale Außenseite des Belagträgers (2) aufgebrachten Reibbelag (3) besteht, wobei der Reibbelag (3) mit einer Reibfläche (7) zum Reibeingriff mit einer Bremstrommel vorgesehen ist und aus einem Bandmaterial (6) gewonnen wird, **gekennzeichnet** durch folgende Verfahrensmerkmale:
- das flexible Reibbelag-Bandmaterial (6) wird zumindest an der der Bremstrommel zugewandten Reibfläche (7) derart mechanisch, vorzugsweise durch einen Schleifbearbeitungsgang, bearbeitet, daß die Reibbelagdicke an den axialen Reibbelagrändern (13) reduziert wird,
- das Reibbelag-Bandmaterial (6) wird in Reibbelagabschnitte entsprechender Länge getrennt,
- je ein Belagabschnitt (3) wird jeweils auf der radialen Außenseite des Belagträgers (2) unlösbar befestigt.

2. Herstellverfahren für eine Trommelbremsbacke (1) nach Anspruch 1, dadurch **gekennzeichnet**, daß die Reibfläche (7) des Reibbelag-Bandmaterials (6) durch einen Schleifbearbeitungsgang an seinen axialen Rändern (13) abgeschrägt wird.

3. Herstellverfahren für eine Trommelbremsbacke nach Anspruch 1, dadurch **gekennzeichnet**, daß die Reibfläche (7) des Reibbelag-Bandmaterials (6) durch einen Schleifbearbeitungsgang in Achsrichtung der Bremstrommel eine konvexe Wölbung erhält.

4. Herstellverfahren für eine Trommelbremsbacke (1) nach einem der vorhergehenden Ansprüche, dadurch **gekennzeichnet**, daß der Reibbelagabschnitt (3) auf dem Belagträger (2) aufgeklebt ist.

5. Herstellverfahren für eine Trommelbremsbacke (1) nach einem der Ansprüche 1 bis 3, dadurch **gekennzeichnet**, daß der Reibbelagabschnitt (3) auf dem Belagträger (2) aufgenietet ist.
